# EUROPÄISCHE PATENTSCHRIFT

(11) **EP 2 330 020 B1**
(45) Veröffentlichungstag und Bekanntmachung des Hinweises auf die Patenterteilung: **02.03.2016**
(21) Anmeldenummer: 10193283.8
(22) Anmeldetag: 01.12.2010
(51) Int. Cl.: B62D 33/02, B60P 7/08, B60J 5/06

(54) **Seitenabdeckung eines Nutzfahrzeugaufbaus**
Side covering of a commercial vehicle structure
Recouvrement latéral d'un châssis de véhicule utilitaire

(30) Priorität: 07.12.2009 DE 102009044801
(43) Veröffentlichungstag der Anmeldung: 08.06.2011
(73) Patentinhaber: F. HESTERBERG & SÖHNE GmbH & Co. KG, 58256 Ennepetal (DE)
(72) Erfinder: Nieland, Friedhelm, 58339, Breckerfeld (DE); Keim, Thorald, 57413, Attendorn (DE)
(74) Vertreter: Bungartz Christophersen Partnerschaft mbB Patentanwälte

(56) Entgegenhaltungen:
- EP-A2- 0 335 427
- WO-A2-2007/110762
- DE-A1-102006 043 655
- DE-U1- 20 022 003
- DE-U1-202006 006 168
- GB-A- 2 457 128

## Beschreibung

Die Erfindung betrifft eine Seitenabdeckung eines Nutzfahrzeugaufbaus, bestehend aus längs des Fahrzeugaufbaus verschieblichen Rungen sowie einer bezüglich der Rungen fahrzeugaußen angeordneten und ebenfalls längs des Fahrzeugaufbaus verschieblichen, biegsamen Plane, wobei jede Runge an ihrem oberen Ende mit einem Rollapparat zur Führung der Runge längs einer Dachkonstruktion des Fahrzeugaufbaus, und an ihrem unteren Ende mit einer Verriegelung zur lösbaren Befestigung der Runge an einem fahrzeugfesten Rungenhalter versehen ist, und mit Verbindungsmitteln, welche die Plane in horizontaler Richtung mit der jeweils dahinter angeordneten Runge verbinden.

Derartige Nutzfahrzeugaufbauten sind weit verbreitet. Zum seitlichen Be- und Entladen auch großer Stückgüter sind die zu beiden Seiten des Nutzfahrzeugaufbaus angeordneten Rungen entriegelbar und anschließend in Längsrichtung verschiebbar, so dass sich zum Be- oder Entladen eine nahezu über die gesamte Aufbaulänge reichende Öffnung ergibt. Vor Antritt der Fahrt sind die einzelnen Rungen zunächst wieder an ihre jeweilige Position zu verschieben und zu verriegeln, bevor anschließend die horizontalen Planlatten mit ihren beiden Enden an den Rungen eingesetzt werden. Ist dies geschehen, wird die während des Beladens auf kurzer Länge zusammengeraffte Seitenplane zugezogen, und ihr zumindest eines Ende mittels einer vertikalen Spannwelle gespannt. In einem weiteren Schritt ist dann noch der untere Planenrand ausreichend gegenüber dem Fahrzeugaufbau zu fixieren. Dies erfolgt mittels einer Vielzahl vertikal angeordneter Spanngurte, deren eines Ende jeweils nahe des unteren Planenrandes befestigt ist, und deren anderes Ende gegenüber dem Ladeboden des Nutzfahrzeugaufbaus befestigt und mittels Spanneinrichtungen gespannt wird.

Eine Seitenabdeckung mit den Merkmalen des Oberbegriffs des Anspruchs 1 ist aus der DE 10 2006 043 655 A1 bekannt. Bei dieser Seitenabdeckung ist die Plane mit den dahinter angeordneten Rungen in Verschieberichtung der Rungen verbunden.

Durch die oben genannten, zum Öffnen des Nutzfahrzeugaufbaus in umgekehrter Reihenfolge durchzuführenden Schritte ist das Vorbereiten des Fahrzeuges zum Beladen und Entladen zeitaufwendig. Ziel der Erfindung ist es, bei geringem Zeitaufwand für das im Rahmen des Be- bzw. Entladevorgangs erforderliche seitliche Öffnen und Verschließen des Nutzfahrzeugaufbaus einen entlang des unteren Planenrandes guten, straffen Abschluss zu erzielen.

Zur Lösung dieser Aufgabe wird für eine Seitenabdeckung eines Nutzfahrzeugaufbaus mit den eingangs genannten Merkmalen mindestens ein die Plane im Bereich des unteren Planenrandes federnd nach unten hin beaufschlagendes Druckelement vorgeschlagen, welches sich an der Runge als Widerlager abstützt.

Die Plane wird also im Bereich des unteren Planenrandes nach unten hin gespannt, wobei sich das beaufschlagende Druckelement an der Runge als Widerlager abstützt. Die Druckelemente können als an der Runge angeschweißte Federelemente gestaltet sein, jedoch sind auch andere Mechanismen denkbar, um eine nach unten gerichtete Kraft auf den unteren Planenrand auszuüben.

Durch das Verbinden der Plane mit den jeweils dahinter angeordneten Rungen ist es möglich, zugleich mit dem Raffen der Plane auch die Rungen zusammen zu schieben, wodurch der Zeitaufwand zum seitlichen Öffnen des Nutzfahrzeugaufbaus deutlich reduziert wird. Gleiches gilt für den Aufwand beim Verschließen der Seitenabdeckung. Dies ist von erheblichem praktischen Vorteil, da gerade im Speditionsgewerbe der Faktor Zeit von entscheidender Bedeutung bei der Preiskalkulation und damit für die Position des Spediteurs im Wettbewerb ist.

Vorteilhafte Ausgestaltungen einer erfindungsgemäßen Seitenabdeckung sind in den Unteransprüchen angegeben.

Weitere Einzelheiten sowie Vorteile ergeben sich aus der nachfolgenden Beschreibung von Ausführungsbeispielen, wobei auf die Zeichnungen Bezug genommen wird. Darin zeigen:
- Fig. 1: in Draufsicht ein Nutzfahrzeug, dessen Nutzfahrzeugaufbau horizontal geschnitten dargestellt ist;
- Fig. 2: die in Fig. 1 bezeichnete Einzelheit II in vergrößertem Maßstab;
- Fig. 3: einen vertikalen Schnitt durch den Nutzfahrzeugaufbau entsprechend der in Fig. 1 eingetragenen Schnittebene III-III;
- Fig. 4: die Einzelheit IV der Fig. 3 in vergrößertem Maßstab;
- Fig. 5: die Einzelheit V der Fig. 3 in vergrößertem Maßstab;

- Fig. 6: einen vertikalen Schnitt durch den Ladeboden des Nutzfahrzeugaufbaus mit einer nach außen ausgelenkten Runge und
- Fig. 7: die Gegenstände nach Fig. 6 in einer gegenüber Fig. 6 geänderten Ausführungsform.

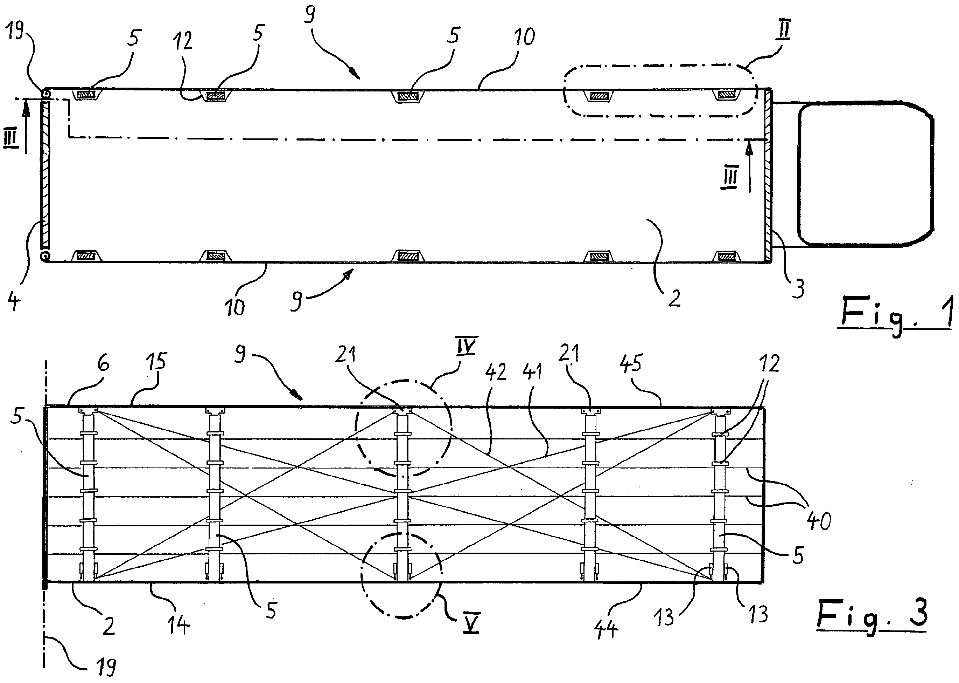

Zur Erläuterung der erfindungsgemäßen Seitenabdeckung für einen Nutzfahrzeugaufbau zeigt Fig. 1 ein Nutzfahrzeug in Gestalt eines Sattelaufliegers. Dessen Aufbau besteht aus einem oberhalb des Fahrzeugchassis angeordneten, bordwandfreien Ladeboden 2, einer in Fig. 1 nicht dargestellten Dachkonstruktion, einer Vorderwand 3, einer Rückwand 4 sowie einer linken und einer rechten Seitenabdeckung 9. Jede Seitenabdeckung 9 setzt sich aus mehreren, hier fünf, vertikalen Rungen 5 sowie einer Plane 10 zusammen, die aus einem biegsamen Material besteht, etwa einem beschichteten Gewebe. Sowohl die Rungen 5, als auch die Plane 10 erstrecken sich über die Höhe des Nutzfahrzeugaufbaus, sie erstrecken sich also von der Höhe des Ladebodens 2 aus bis zu der von der Vorderwand 3, der Rückwand 4 und den Rungen 5 getragenen Dachkonstruktion.

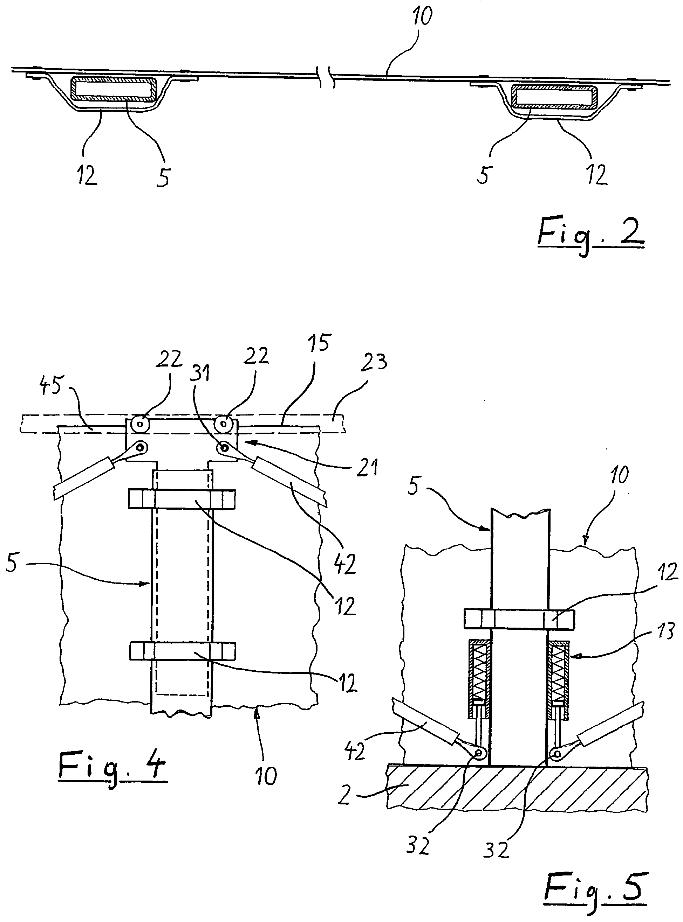

Die Fign. 4 und 5 zeigen, mit Blickrichtung von fahrzeuginnen aus, Einzelheiten jeweils im Bereich des oberen Endes der Rungen (Fig. 4) bzw. des unteren Endes der Rungen (Fig. 5). Jede Runge 5 besteht in üblicher Weise aus einem vorzugsweise als Profil gestalteten Rungengrundkörper mit einem das obere Ende der Runge bildenden Rollapparat 21. An dem Rollapparat 21 sind zwei oder mehr Rollen 22 frei drehbar gelagert, die in einer Schiene 23 in Höhe der Dachkonstruktion 9 laufen. Mittels des Rollapparats 21 geführt lässt sich die Runge 5 daher, in der Schiene 23 eingehängt, in Fahrzeuglängsrichtung verschieben.

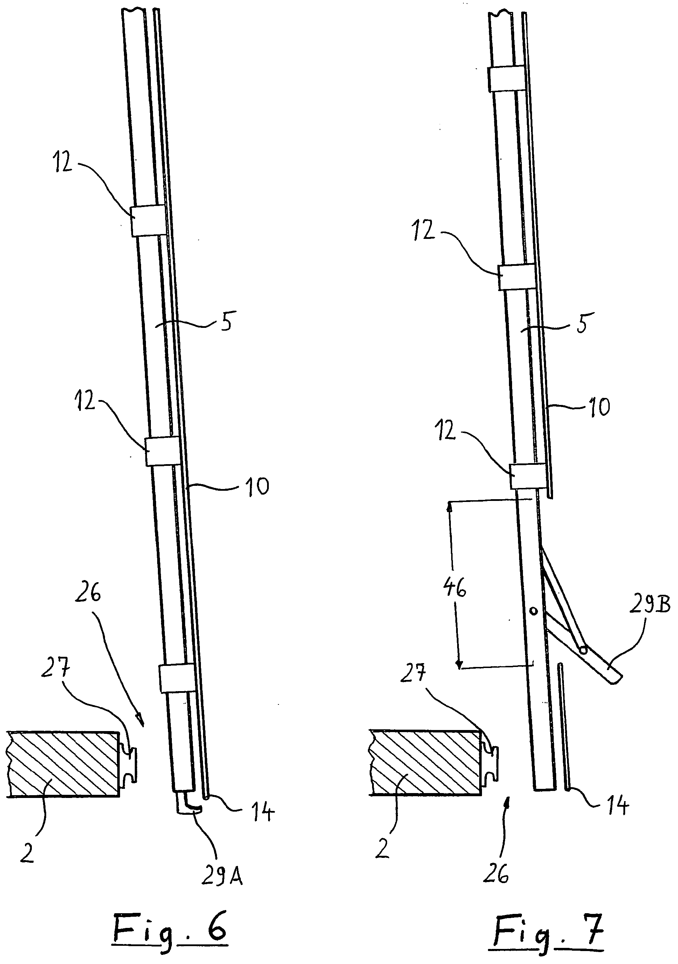

Das untere Ende jeder Runge 5 wird, soweit keine Belade- oder Entladetätigkeit stattfindet, gegenüber dem Ladeboden 2 des Nutzfahrzeugaufbaus verriegelt. Gemäß Fig. 6 ist zur formschlüssigen Verriegelung 26 der jeweiligen Runge 5 der Ladeboden 2 mit einem daran befestigten Rungenhalter 27 versehen. Zur Betätigung der in die Runge 5 integrierten Rungenverriegelung ist an der Runge 5 ein Betätigungsgriff 29A angeordnet. Dieser erlaubt über einen hier nicht dargestellten Mechanismus das formschlüssige Verbinden der Runge 5 mit dem Rungenhalter 27 bzw. umgekehrt das Lösen dieser Teile voneinander. In entriegeltem Zustand lässt sich die dann an ihrem Rollapparat 21 frei hängende Runge 5, wie in Fig. 6 dargestellt, etwas nach außen von dem Ladeboden 2 und damit dem Rungenhalter 27 weg schwenken, so dass dann die Runge, an ihrem Rollapparat 21 längsbeweglich hängend, in Fahrzeuglängsrichtung verschoben werden kann. Gleiches gilt für die anderen Rungen der betreffenden Fahrzeugseite.

Zur Erzielung der eingangs dargestellten Vorteile ist die Seitenplane 10 mit jeder der auf dieser Fahrzeugseite angeordneten, längsverschieblichen Rungen 5 in horizontaler Richtung verbunden, wodurch es bei einem Zusammenschieben, d.h. Raffen der betreffenden Seitenplane 10 zum vorderen oder hinteren Ende des Fahrzeugaufbaus hin zu einem Mitnehmen der einzelnen Rungen 5 kommt, und umgekehrt bei einem Verfahren der Rungen 5 in Fahrzeuglängsrichtung zu einem gleichzeitigen Mitnehmen der Seitenplane 10.

Eine Verbindung zwischen Plane 10 und Runge 5 besteht zunächst im Bereich des oberen Planenrandes 15. Hierzu sind an Befestigungspunkten 31 Nieten oder Bolzen sowohl durch den Rollapparat 21, als auch durch die demgegenüber fahrzeugaußen angeordnete Plane 10 hindurchgeführt. An den Befestigungspunkten 31 wird daher zwischen Plane und Runge eine Verbindung sowohl in horizontaler, als auch in vertikaler Richtung hergestellt. Die Befestigungspunkte 31 unterstützen daher auch das Aufhängen der Plane 10 in Höhe des Dachaufbaus 6. Auf dem Längsabschnitt zwischen zwei benachbarten Rungen 5 kann die Plane 10 mit weiteren Aufhängungspunkten versehen sein. Dies können am oberen Planenrand 15 angeordnete, entlang der Schiene 23 frei bewegliche Rollen sein.

Um die außen liegende Plane 10 in horizontaler Richtung mit der innen jeweils dahinter angeordneten Runge 5 zu verbinden, sind ferner mehrere über die Höhe der Runge 5 verteilt angeordnete Verbindungsmittel 12 vorgesehen. Vorzugsweise sind die Verbindungsmittel 12 als an der Planeninnenseite befestigte Bänder oder kurze Gurte gestaltet, die um die Vorder-, Innen und Rückseite der jeweiligen Runge 5 geführt sind. Gemäß Fig. 2 bildet jedes der Bänder 12 gemeinsam mit der Planeninnenseite eine nach unten und oben offene Tasche, durch die die Runge 5 hindurchführt. Die Befestigung der flexiblen Bänder 12 an der Plane 10 kann z. B. mittels Nieten erfolgen, oder durch Vernähen der Bänder mit der Plane. Zusätzlich ist es möglich, jedes Band 12 aus zwei lösbaren Bandhälften zusammenzusetzen, um so die Taschen, etwa zum Austausch einer schadhaften Plane, vollständig öffnen zu können.

Gemäß Fig. 3 sind die durch die Bänder bereitgestellten Verbindungsmittel 12 über die Höhe des Nutzfahrzeugaufbaus verteilt angeordnet, vorzugsweise in gleichen vertikalen Abständen.

Gemäß Fig. 5 besteht eine weitere Verbindung zwischen der Plane 10 und der jeweils dahinter angeordneten Runge 5 im Bereich des unteren Planenrandes. Ähnlich wie im Bereich des oberen Planenrandes ist an Befestigungspunkten 32, vorzugsweise in Gestalt von Nieten oder Bolzen, die Plane mit der Runge verbunden. Druckelemente 13, welche am Grundkörper der Runge 3 befestigt sind, üben einen nach unten gerichteten Druck an den Befestigungspunkten 32 aus, wodurch der untere Planenrand nach unten hin gespannt wird. Die Druckelemente 13 sind beim Ausführungsbeispiel als an der Runge 5 angeschweißte Federelemente gestaltet, jedoch sind auch andere Mechanismen denkbar, um eine nach unten gerichtete Kraft auf den unteren Planenrand 14 auszuüben.

Indem die Seitenplane 10 mehrfach mit jeder Runge 5 verbunden ist, führt jedes Zusammenschieben, d.h. Raffen der flexiblen Plane 10 zum selbsttätigen Mitnehmen der dahinter angeordneten Rungen. Es ist daher zum Öffnen der Seitenabdeckung 9 nicht erforderlich, zunächst erst die Plane zu ihrem einen Ende hin zusammenzuraffen, und anschließend noch die Rungen bis in diese Seitwärtsposition zu verschieben. Umgekehrt ist auch das Verschließen der Seitenabdeckung 9 in einem einzigen, schnell durchzuführenden Arbeitsschritt möglich, indem lediglich die Plane 10 zugezogen wird, wobei diese die Rungen 5 mitnimmt.

Von zusätzlichem Vorteil ist, dass das beschriebene System keine zwischen benachbarten Rungen angeordneten Planlatten mehr erfordert. Denn gerade das Einsetzen und Herausnehmen der teils in großer Höhe anzuordnenden Planlatten ist mit einem erheblichen Zeitaufwand verbunden. Zur Aufnahme der Seitenkräfte ist vielmehr eine Mehrzahl von biegsamen Verstärkungsbändern und/oder Verstärkungsseilen innen an der Plane 10 befestigt oder in das biegsame Material der Plane eingearbeitet. Eine Möglichkeit der Anordnung derartiger Verstärkungsbänder bzw. Verstärkungsseile wird im Folgenden anhand der Fig. 3 beschrieben.

Die Plane ist zunächst mit mehreren reckfesten Verstärkungsbändern 40 versehen, die sich horizontal vom vorderen bis zum hinteren Rand der Plane 10 erstrecken. Wird zum horizontalen Spannen der Plane 10 eine übliche, vertikal angeordnete Spannwelle 19 eingesetzt, so werden die horizontalen Verstärkungsbänder 40 teilweise mit auf die Spannwelle 19 aufgewickelt.

Des Weiteren weist die Plane 10 ein System von diagonalen Verstärkungsbändern 41, 42 auf. Charakteristisch für die diagonalen Verstärkungsbänder 41, 42 ist, dass deren oberes Ende jeweils nahe des oberen Planenrandes 15, und ihr unteres Ende jeweils nahe des unteren Planenrandes 14 gegenüber der Plane 10 festgelegt ist. Zusätzlich können die Verstärkungsbänder 41, 42 auch über ihre gesamte Länge kraft- oder formschlüssig mit dem Material der Plane verbunden sein, etwa durch Vernähen mit dem Planenmaterial.

Es ist von Vorteil dass, wie auf den Figuren 3, 4 und 5 dargestellt, die Enden der diagonalen Verstärkungsbänder 41, 42 nicht nur an der Plane 10, sondern zugleich auch an einer Runge 5 festgelegt bzw. verankert sind. Dies wird erreicht, indem die an dem Rollapparat 21 angeordneten Befestigungspunkte 31 das obere Ende, und die Befestigungspunkte 32 das untere Ende des diagonalen Verstärkungsbandes 41, 42 verankern.

Gemäß Fig. 3 erstrecken sich erste Verstärkungsbänder 41 über eine größere Distanz, hier zwischen fünf Rungen, und zweite Verstärkungsbänder 42 über eine kleinere Distanz von drei Rungen. Auch andere Diagonalen sind möglich.

Anstelle oder zusätzlich zu den Verstärkungsbändern können auch Verstärkungsseile an der Plane befestigt werden, zumal auch ein Seil ein hohes Maß an Reckfestigkeit bietet und bei Verbindung mit der Plane noch eine ausreichende Biegsamkeit der Plane zulässt, so dass sich diese am vorderen oder hinteren Ende des Nutzfahrzeugaufbaus auf geringer Länge raffen lässt. Schließlich können zusätzliche Verstärkungsbänder oder -seile 44, 45 entlang des unteren Planenrandes 14 und/oder des oberen Planenrandes 15 verlaufen. Das untere Verstärkungsseil 44 kann zusätzlich gegenüber dem unteren Planenrand 14 vorgespannt sein, etwa mittels integrierter Federn oder elastischer Seilabschnitte. Auf diese Weise lässt sich entlang des unteren Planenrandes 14 ein guter, straffer Abschluss gegenüber dem Ladeboden 2 erzielen.

Bei der Ausführungsform nach Fig. 7 befindet sich der Betätigungsgriff 29B der Rungenverriegelung 26 nicht wie bei Fig. 6 am äußersten unteren Ende der Runge, wo dieser ohne weiteres von Hand ergreifbar ist, sondern etwas weiter oben am Rungengrundkörper. Um gleichwohl die Runge 5 entriegeln und verriegeln zu können, ist die Plane 10 im Schwenkbereich des Betätigungsgriffs 29B mit einer Öffnung 46 oder einem Schlitz oder einer Aussparung versehen. Die Öffnung 46 ist bei Nichtgebrauch und zum Schutz gegen Regen und Schmutz verschließbar, zum Beispiel durch das biegsame Planenmaterial selbst und unter Einsatz eines Haftverschlusses.

Ebenfalls zum Schutz gegenüber Regen, aufgewirbelter Flüssigkeit und Schmutz kann die Plane 10 innen entlang ihres unteren Planenrandes 14 mit einer Wassersperre versehen sein, die abdichtend gegen den Ladeboden 2 des Fahrzeugaufbaus anliegt.

### Bezugszeichenliste

- 2: Ladeboden
- 3: Vorderwand
- 4: Rückwand
- 5: Runge
- 6: Dachkonstruktion
- 9: Seitenabdeckung
- 10: Plane
- 12: Verbindungsmittel, Band
- 13: Druckelement
- 14: unterer Planenrand
- 15: oberer Planenrand
- 19: Spannwelle
- 21: Rollapparat
- 22: Rolle
- 23: Schiene
- 26: Rungenverriegelung
- 27: Rungenhalter
- 29A: Betätigungsgriff
- 29B: Betätigungsgriff
- 31: oberer Befestigungspunkt
- 32: unterer Befestigungspunkt
- 40: Verstärkungsband
- 41: diagonales Verstärkungsband oder -seil
- 42: diagonales Verstärkungsband oder -seil
- 44: Verstärkungsseil
- 45: Verstärkungsseil
- 46: Öffnung

## Patentansprüche

1. Seitenabdeckung eines Nutzfahrzeugaufbaus, bestehend aus längs des Fahrzeugaufbaus verschieblichen Rungen (5) sowie einer bezüglich der Rungen (5) fahrzeugaußen angeordneten und ebenfalls längs des Fahrzeugaufbaus verschieblichen, biegsamen Plane (10), wobei jede Runge (5) an ihrem oberen Ende mit einem Rollapparat (21) zur Führung der Runge (5) längs einer Dachkonstruktion (6) des Fahrzeugaufbaus, und an ihrem unteren Ende mit einer Verriegelung (26) zur lösbaren Befestigung der Runge (5) an einem fahrzeugfesten Rungenhalter (27) versehen ist, und mit Verbindungsmitteln (12, 31, 32), welche die Plane (10) in horizontaler Richtung mit der jeweils dahinter angeordneten Runge (5) verbinden, **gekennzeichnet durch** mindestens ein die Plane (10) im Bereich des unteren Planenrandes (14) federnd nach unten hin beaufschlagendes Druckelement (13), welches sich an der Runge (5) als Widerlager abstützt.

2. Seitenabdeckung nach Anspruch 1, **dadurch gekennzeichnet, dass** die Plane (10) über eine Mehrzahl der Verbindungsmittel (12) mit der Runge (5) verbunden ist, und dass die Verbindungsmittel (12) über die Höhe der Runge (5) verteilt angeordnet sind, vorzugsweise in gleichen vertikalen Abständen.

3. Seitenabdeckung nach Anspruch 1 oder 2, **dadurch gekennzeichnet, dass** das Verbindungsmittel (12) ein an der Planeninnenseite befestigtes, um die Vorder-, Innen- und Rückseite der jeweiligen Runge (5) geführtes Band ist.

4. Seitenabdeckung nach Anspruch 1, **gekennzeichnet durch** einen auf Druck arbeitenden Federspeicher als Druckelement (13).

5. Seitenabdeckung nach einem der Ansprüche 1 bis 4, **dadurch gekennzeichnet, dass** die Runge (5) zum Lösen der Verriegelung (26) mit einem Betätigungsgriff (29A) versehen ist, und dass der Betätigungsgriff (29A) im Bereich des unteren Planenrandes (14) angeordnet ist.

6. Seitenabdeckung nach einem der Ansprüche 1 bis 4, **dadurch gekennzeichnet, dass** die Runge (5) zum Lösen der Verriegelung (26) mit einem Betätigungsgriff (29B) versehen ist, und dass die Plane (10) in ihrem den Betätigungsgriff (29B) nach außen abdeckenden Bereich für den Zugriff auf den Betätigungsgriff mit einer Öffnung (46), einem Schlitz oder einer Aussparung versehen ist.

7. Seitenabdeckung nach Anspruch 6, **dadurch gekennzeichnet, dass** die Öffnung (46) bzw. der Schlitz bzw. die Aussparung durch das biegsame Planenmaterial selbst verschließbar ist, z. B. mittels eines Haftverschlusses.

8. Seitenabdeckung nach einem der vorangehenden Ansprüche, **dadurch gekennzeichnet, dass** die Plane (10) mit diagonal verlaufenden und sich zum Teil kreuzenden Verstärkungsbändern oder -seilen (41, 42) verbunden ist, deren jeweils einer Endpunkt (32) am unteren, und deren jeweils anderer Endpunkt am oberen Planenrand festgelegt ist.

9. Seitenabdeckung nach Anspruch 8, **dadurch gekennzeichnet, dass** die oberen Endpunkte (31) der Verstärkungsbänder oder -seile (41, 42) zusätzlich an der Runge (5) selbst oder an deren Rollapparat (21) festgelegt sind.

10. Seitenabdeckung nach Anspruch 8, **dadurch gekennzeichnet, dass** die unteren Endpunkte (32) der Verstärkungsbänder oder -seile (41, 42) zusätzlich am Ort der Druckbeaufschlagung durch das Druckelement (13) festgelegt sind.

11. Seitenabdeckung nach einem der vorangehenden Ansprüche, **dadurch gekennzeichnet, dass** die Plane (10) entlang des unteren Planenrandes (14) fahrzeuginnenseitig mit einer Wassersperre versehen ist, die abdichtend gegen den Fahrzeugaufbau anliegt.

12. Seitenabdeckung nach einem der vorangehenden Ansprüche, **dadurch gekennzeichnet, dass** zum horizontalen Spannen der Plane (10) deren vorderer und/oder hinterer Planenrand auf eine vertikale Spannwelle (19) wickelbar ist, und dass die Plane (10) entlang des unteren Planenrandes (14) mit einem auf die Spannwelle (19) aufwickelbaren Verstärkungsseil (44) versehen ist.

13. Seitenabdeckung nach Anspruch 12, **dadurch gekennzeichnet, dass** das Verstärkungsseil (44) gegenüber dem unteren Planenrand (14) vorgespannt ist.

## Claims

1. Side covering of a commercial vehicle structure, consisting of stanchions (5) which are displaceable along the vehicle structure, and of a flexible tarpaulin (10) which is arranged on the outside of the vehicle with respect to the stanchions (5) and is likewise displaceable along the vehicle structure, wherein each stanchion (5) is provided at the upper end thereof with a roller apparatus (21) for guiding the stanchion (5) along a roof construction (6) of the vehicle structure and, at the lower end thereof, with a lock (26) for the releasable fastening of the stanchion (5) to a vehicle-mounted stanchion holder (27), and with connecting means (12, 31, 32) which connect the tarpaulin (10) in the horizontal direction to the stanchion (5) in each case arranged therebehind, **characterized by** at least one pressure element (13) which pressurizes the tarpaulin (10) downwards in a resilient manner in the region of the lower tarpaulin edge (14) and is supported on the stanchion (5) as an abutment.

2. Side covering according to Claim 1, **characterized in that** the tarpaulin (10) is connected to the stanchion (5) via a plurality of the connecting means (12), and **in that** the connecting means (12) are arranged distributed over the height of the stanchion (5), preferably at equal vertical distances.

3. Side covering according to Claim 1 or 2, **characterized in that** the connecting means (12) is a band which is fastened to the inner side of the tarpaulin and is guided around the front side, inner side and rear side of the respective stanchion (5).

4. Side covering according to Claim 1, **characterized by** a spring accumulator operating under pressure as the pressure element (13).

5. Side covering according to one of Claims 1 to 4, **characterized in that** the stanchion (5) is provided with an actuating handle (29A) for releasing the lock (26), and **in that** the actuating handle (29A) is arranged in the region of the lower tarpaulin edge (14).

6. Side covering according to one of Claims 1 to 4, **characterized in that** the stanchion (5) is provided with an actuating handle (29B) for releasing the lock (26), and **in that** that region of the tarpaulin (10) which covers the actuating handle (29B) outwards is provided with an opening (46), a slot or a recess for access to the actuating handle.

7. Side covering according to Claim 6, **characterized in that** the opening (46) or the slot or the recess can be closed by the flexible tarpaulin material itself, for example by means of a hook-and-loop closure.

8. Side covering according to one of the preceding claims, **characterized in that** the tarpaulin (10) is connected to diagonally extending and partially intersecting reinforcing bands or reinforcing ropes (41, 42), the respectively one end point (32) of which is fixed to the lower tarpaulin edge and the respectively other end point of which is fixed to the upper tarpaulin edge.

9. Side covering according to Claim 8, **characterized in that** the upper end points (31) of the reinforcing bands or reinforcing ropes (41, 42) are additionally fixed to the stanchion (5) itself or to the roller apparatus (21) thereof.

10. Side covering according to Claim 8, **characterized in that** the lower end points (32) of the reinforcing bands or reinforcing ropes (41, 42) are additionally fixed to the location of pressurization by the pressure element (13).

11. Side covering according to one of the preceding claims, **characterized in that** the tarpaulin (10) is provided along the lower tarpaulin edge (14) on the inner side of the vehicle with a water barrier which bears in a sealing manner against the vehicle structure.

12. Side covering according to one of the preceding claims, **characterized in that**, for the horizontal tensioning of the tarpaulin (10), the front and/or rear tarpaulin edge thereof can be wound onto a vertical tensioning shaft (19), and **in that** the tarpaulin (10) is provided on the lower tarpaulin edge (14) with a reinforcing rope (44) which can be wound onto the tensioning shaft (19).

13. Side covering according to Claim 12, **characterized in that** the reinforcing rope (44) is pretensioned in relation to the lower tarpaulin edge (14).

## Revendications

1. Recouvrement latéral d'un châssis de véhicule utilitaire, constitué de ranches (5) déplaçables le long du châssis de véhicule ainsi que d'une bâche flexible (10) disposée à l'extérieur du véhicule par rapport aux ranches (5) et également déplaçable le long du châssis de véhicule, chaque ranche (5) étant pourvue au niveau de son extrémité supérieure d'un appareil à rouleaux (21) pour guider la ranche (5) le long d'une construction de toit (6) du châssis de véhicule, et au niveau de son extrémité inférieure d'un verrouillage (26) pour la fixation amovible de la ranche (5) à une fixation de ranche (27) fixée au véhicule, et comprenant des moyens de connexion (12, 31, 32) qui relient la bâche (10) dans la direction horizontale avec la ranche (5) disposée à chaque fois par derrière, **caractérisé par** au moins un élément de pression (13) sollicitant de manière élastique vers le bas la bâche (10) dans la région du bord inférieur de la bâche (14), lequel s'appuie sur la ranche (5) en tant que butée.

2. Recouvrement latéral selon la revendication 1, **caractérisé en ce que** la bâche (10) est connectée à la ranche (5) par le biais d'une pluralité de moyens de connexion (12), et **en ce que** les moyens de connexion (12) sont répartis sur la hauteur de la ranche (5), de préférence à intervalles verticaux identiques.

3. Recouvrement latéral selon la revendication 1 ou 2, **caractérisé en ce que** le moyen de connexion (12) est une bande fixée au côté intérieur de la bâche, guidée autour des côtés avant, intérieur et arrière de la ranche respective (5).

4. Recouvrement latéral selon la revendication 1, **caractérisé par** un accumulateur à ressort fonctionnant en pression en tant qu'élément de pression (13).

5. Recouvrement latéral selon l'une quelconque des revendications 1 à 4, **caractérisé en ce que** la ranche (5) est pourvue d'une prise d'actionnement (29A) pour libérer le verrouillage (26), et **en ce que** la prise d'actionnement (29A) est disposée dans la région du bord inférieur (14) de la bâche.

6. Recouvrement latéral selon l'une quelconque des revendications 1 à 4, **caractérisé en ce que** la ranche (5) est pourvue d'une prise d'actionnement (29B) pour libérer le verrouillage (26) et **en ce que** la bâche (10) est pourvue, dans sa région recouvrant la prise d'actionnement (29B) vers l'extérieur, pour l'accès à la prise d'actionnement, d'une ouverture (46), d'une fente ou d'un évidement.

7. Recouvrement latéral selon la revendication 6, **caractérisé en ce que** l'ouverture (46) ou la fente ou l'évidement peut être fermé(e) par le matériau flexible de la bâche lui-même, par exemple au moyen d'une attache de fixation.

8. Recouvrement latéral selon l'une quelconque des revendications précédentes, **caractérisé en ce que** la bâche (10) est connectée à des bandes ou des câbles de renforcement (41, 42) s'étendant en diagonale et se croisant en partie, dont un point d'extrémité respectif (32) est fixé au bord inférieur de la bâche et dont l'autre point d'extrémité respectif est fixé au bord supérieur de la bâche.

9. Recouvrement latéral selon la revendication 8, **caractérisé en ce que** les points d'extrémité supérieurs (31) des bandes ou des câbles de renforcement (41, 42) sont en outre fixés à la ranche (5) elle-même ou à son appareil à rouleaux (21) .

10. Recouvrement latéral selon la revendication 8, **caractérisé en ce que** les points d'extrémité inférieurs (32) des bandes ou des câbles de renforcement (41, 42) sont fixés en outre à l'emplacement de la sollicitation par pression par l'élément de pression (13).

11. Recouvrement latéral selon l'une quelconque des revendications précédentes, **caractérisé en ce que** la bâche (10) est pourvue le long du bord inférieur (14) de la bâche du côté intérieur du véhicule d'une barrière d'eau qui s'applique de manière hermétique contre le châssis du véhicule.

12. Recouvrement latéral selon l'une quelconque des revendications précédentes, **caractérisé en ce que** pour le serrage horizontal de la bâche (10), le bord de bâche avant et/ou arrière peut être enroulé sur un arbre de serrage vertical (19), et **en ce que** la bâche (10) est pourvue le long du bord inférieur (14) de la bâche d'un câble de renforcement (44) pouvant être enroulé sur l'arbre de serrage (19).

13. Recouvrement latéral selon la revendication 12, **caractérisé en ce que** le câble de renforcement (44) est précontraint par rapport au bord inférieur (14) de la bâche.
